(19) Europäisches Patentamt
European Patent Office
Office européen des brevets

(11) Publication number: **0 172 724 B1**

# (12) EUROPEAN PATENT SPECIFICATION

(45) Date of publication of patent specification: **24.07.91** (51) Int. Cl.5: **C08F 2/32**

(21) Application number: **85305773.5**

(22) Date of filing: **14.08.85**

## (54) Polymerisation processes and polymeric compositions.

(30) Priority: **15.08.84 GB 8420693**
**15.08.84 GB 8420694**
**15.08.84 GB 8420695**
**30.01.85 GB 8502329**
**12.08.85 GB 8520218**

(43) Date of publication of application:
**26.02.86 Bulletin 86/09**

(45) Publication of the grant of the patent:
**24.07.91 Bulletin 91/30**

(84) Designated Contracting States:
**BE DE FR GB IT NL SE**

(56) References cited:
**EP-A- 0 003 235**
**EP-A- 0 056 627**
**US-A- 4 524 175**

(73) Proprietor: **ALLIED COLLOIDS LIMITED**
**P.O. Box 38 Low Moor**
**Bradford West Yorkshire, BD12 0JZ(GB)**

(72) Inventor: **Allen, Adrian**
**6 Beechwood Drive**
**Skipton North Yorkshire(GB)**
Inventor: **Farrar, David**
**5 The Grove Idle**
**Bradford West Yorkshire(GB)**

(74) Representative: **Lawrence, Peter Robin Broughton et al**
**GILL JENNINGS & EVERY 53-64 Chancery Lane**
**London WC2A 1HN(GB)**

**EP 0 172 724 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

Polymers that are formed from water soluble monomers are frequently made by reverse phase polymerisation to yield a stable water in oil dispersion of the polymer. It is well known to dehydrate this dispersion. A typical disclosure of such processes is in EP 126528.

In U.S. 4,059 552 and 4,172,066 it is proposed to thicken an aqueous medium using microbeads of a cross linked water insoluble, water swellable, polymer formed by reverse phase polymerisation from water soluble monomers including a cross linking agent. In GB 2,007,238 a thickening blend is formed from a water soluble polymer and a water swellable cross linked polymer. In European application 85300292.1 (unpublished at the priority date of this application) a printing paste thickener is made by reverse phase polymerisation of an ethylenically unsaturated acid that has been partially neutralised and in the presence of a cross linking agent, the ratio of acid groups to salt groups being 80:20 to 10:90 during polymerisation.

It is well known to form polymers from a mixture of monomers one of which includes a pendant hydrophobic group that contains at least one hydrocarbyl group of at least eight carbon atoms. Such groups, especially when carried by an alkoxy chain, tend to create association between adjacent molecules. Frequently other monomers used for the production of such polymers include materials such as ethyl acrylate which is water insoluble. Examples of disclosures of such polymers are GB 1,167,524, 1,273,552, U.S. 4,138,381, 4,268,641 4,384,096; 4,463,151 and EP 13836 and 109820. It has been proposed to make them by precipitation polymerisation (GB 1,167,524) or solution polymerisation (U.S. 4,138,381) but in most instances they are made by conventional emulsion polymerisation, i.e., by emulsifying water insoluble monomers into water and polymerising to form an emulsion of the desired polymer.

Even in those patents where it is proposed to polymerise in solution either in water or water solvent mixtures the detailed description is always of the use of water solvent mixtures (see for instance EP 63018). The reason for this preference to polymerise as oil in water emulsions or as solutions in organic solvents is probably twofold. Firstly, the monomers containing the hydrophobic group would be expected to be much less miscible with water than conventional monomers, because of the hydrophobe and so conventional processes in which an aqueous solution of monomer is polymerised would be expected to be inoperable. Secondly, the monomer that includes the hydrophobe is often made from a high HLB surfactant and so its presence in a monomer mixture would be expected to destabilise any emulsion that would be destabilised by high HLB surfactants.

In EP 109820 it is proposed to make polymers of at least 10% of an acidic monomer that can be, for instance, acrylic acid but which is methacrylic acid in the examples, 0.5 to 30% of a particular type of hydrophobic monomer, optionally a termonomer that can be selected from a wide variety of materials including acrylamide but which is, in all the examples, ethyl acrylate, and optionally a cross linking agent, although no cross linking agent is used in the examples. It is stated that the polymer may be an emulsion copolymer obtainable by copolymerisation in an aqueous or inverse emulsion system, a suspension copolymer, a precipitation copolymer, a solution copolymer, a solid copolymer or a non-aqueous dispersion copolymer, but in all the examples polymerisation is by the oil in water emulsion technique that is customarily used for associative polymers of this general type.

In U.S. 4,423,199 the same inventors have the same description of possible polymerisation processes, applied to the production of polymers including a different type of hydrophobic monomer. Again all the examples are restricted to oil in water emulsion polymerisation of linear polymers.

Many associative polymers do not swell or dissolve in water but do swell or dissolve in aqueous alkali. However, water soluble associative polymers are known from, e.g., EP-A-003235. In U.S. 4,421,902 various polymerisation processes are mentioned for the production of a broad class of associative polymers but the examples only show emulsion and organic solution polymerisation and the specifically described polymers are insoluble in water.

In U.S. 4,524,175 (not published until after the priority date of this invention) a water in oil emulsion of an acrylamide/dodecyl methacrylate copolymer is made by a special reverse phase polymerisation wherein the dodecyl methacrylate is dissolved in the oil phase, instead of the aqueous phase, and an oil soluble initiator is used instead of the conventional water soluble initiator.

The present state of the art therefore is that although reverse phase polymerisation has been mentioned in the literature for the production of associative polymers containing hydrophobic groups, in practice the only operative method that has been described (since the priority date of this invention) is in U.S. 4,524,175 involving a process in which the hydrophobic monomer is in the oil phase instead of, as in true reverse phase polymerisation, in the aqueous phase.

Reverse phase polymerisation is recognised as a polymerisation technique that gives polymers of particularly valuable properties for many purposes, for instance as thickeners. However it has not previously been considered possible to apply this to the polymerisation of associative polymers containing hydrophobic groups.

A polymer is made in the invention by copolymerisation of (a)an ethylenically unsaturated monomer containing a pendant hydrophobic group of at least 8 carbon atoms and (b) a water soluble ethylenically unsaturated comonomer, and is characterised in that the monomers are, as a blend, soluble in water and that a dispersion in a non-aqueous liquid is formed of an aqueous solution of a blend of all the monomers and the blend is copolymerised by reverse phase polymerisation in the presence of a water soluble initiator to form a stable dispersion of the aqueous polymer in the non-aqueous liquid. Generally the process is conducted in the presence of water-in-oil emulsifier to give a polymer particle size of below 4$\mu$m.

The invention depends in part upon the discovery that it is possible to form an aqueous solution of a blend of all the monomers that can be stably dispersed in a non-aqueous liquid for reverse phase polymerisation, even though one of the monomers provides hydrophobic groups. Often that monomer is the ester or amide of an ethylenically unsaturated acid, or a (meth) allyl ether, with a hydroxy terminated surfactant of HLB above 8 and it is very surprising that such monomers can be incorporated in the disperse phase of a water in oil emulsion without destabilising the dispersion before or after polymerisation.

The amount of the defined hydrophobic monomer must not be so high that it does destabilise the dispersion or that it does not go into solution in the aqueous blend. Generally the amount of the monomer (a) is below 50% by weight and usually below 25%, for instance 2 to 10%. Suitable results are often obtained with values of 3 to 7% by weight.

The monomer is preferably free of hydrophilic groups such as unblocked acid, salt, amine, amide or hydroxyl groups.

The monomer (a) is preferably an ethylenically unsaturated monomer including a group $-B_nA_mR$ where A is propoxy or butoxy, B is ethoxy ($CH_2CH_2O$), n is zero or, preferably a positive integer generally in the range 2-100, e.g. above 5, often above 10 and preferably 20 to 100 and m is generally zero but, if n is a positive number, m can be a smaller positive number. Thus a polyoxyethylene chain may be interrupted by oxypropylene groups. By appropriate choice of the value of n, m, and the group R it is possible to control the solubility of the monomer and the properties of the final polymer.

R is a hydrophobic group containing at least 8 carbon atoms. It can be a polyoxyalkylene chain where the alkylene groups wholly or mainly are propylene or higher but preferably is a hydrocarbyl group.

The hydrocarbyl group generally contains from 8 to 30, preferably 10 to 24 and most preferably 12 to 18 carbon atoms. It may be selected from alkyl, for instance octyl, lauryl or stearyl, alkaryl such as ethyl benzene ($-C_2H_4Ph$), aryl such as naphthyl, aralkyl such as alkyl phenyl wherein the alkyl group generally contains 6 to 12 carbon atoms, cycloalkyl (including polycyclic alkyl groups), or mixtures of one or more such groups. Preferred hydrocarbyl groups are alkyl and aralkyl groups. Any of these groups may additionally be substituted provided the substituents do not render the pendant group hydrophilic to an extent that the desired improvement in properties due to the hydrophobic group is lost.

The monomer may be a (meth) acrylic or (meth) allylic monomer. The linkage between the ethylenically unsaturated carbon atom of the monomer and the group $-B_nA_mR$ is generally a chain of at least two, and often at least four atoms and often includes one or more amide, amine, ether or ester groups within the chain. The monomer may be di or polyfunctional, e.g., a derivative of itaconic acid, in which event both acid groups may be substituted by $-B_nA_mR$ or one may be unsubstituted or substituted by a different esterifying group, for instance methyl or higher alkyl, e.g., butyl.

Preferred monomers are (meth) allylic ethers and amides or esters of ethylenically unsaturated carboxylic acids preferably acrylamide, acrylic acid, methacrylic acid, maleic acid or itaconic acid. In esters, the group may be bonded direct to the carboxylic group of the ethylenically unsaturated acid or may be bonded to an esterifying group that may include an amino group or one or more ether or ester linkages. For instance the group R may be a quaternising group in, for instance, the amino group of an amino alkyl esterifying group. In amides the group $-B_nA_mR$ may be bonded to a nitrogen atom of the amide or may be bonded to the nitrogen atom of an aminoalkyl group bonded to amide nitrogen, for instance as a quaternising group. Preferably the monomer (a) is a compound formed by reacting allyl chloride or alcohol or an appropriate ethylenically unsaturated acid, nitrile, halide or ester with a surfactant, preferably a hydroxyl terminated surfactant, preferably having HLB above 8.

Preferred monomers (a) are compounds of the formula

$$R^1CH=C(R^2)QB_nA_mR$$

where

R = $C_8$-$C_{30}$ alkyl or aralkyl,

$R^1$ = $COOR^3$ or $QB_nA_mR$ when $R^2$ = H and Q ≠

$CH_2O$
or $R^1$ = H
$R^2$ = H or $CH_3$ or
$R^2$ = $CH_2COOR^3$ and Q ≠ $CH_2O$
$R^2$ = $CH_2QB_nA_mR$ and Q ≠ $CH_2O$
$R^3$ = H or $C_1$-$C_8$ alkyl
Q = O when $R^1$ and $R^2$ = H or Q = $CH_2O$, COO or $CONR^4$ where $R^4$ = H or $CH_3$, or when n and m are both zero Q can be $COOR^5\overset{+}{N}(R^3)_2$. $X^-$ where $R^5$ = $C_1$-$C_8$ alkylene optionally substituted by hydroxyl, e.g.,

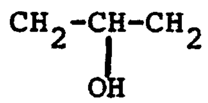

and $X^-$ = anion, e.g., $Cl^-$ $Br^-$ or $CH_3SO_4^-$ or Q can be $CON(R^4)R^5\overset{+}{N}(R^3)_2$ $X^-$ where $R^3$, $R^4$, $R^5$, and $X^-$ are as above; or $COO(R^5)OOC$ or $COO(R^5)COO$ where $R^5$ is as above; or $COO(R^5)OOC(R^5)\overset{+}{N}(R^3)_2.X^-$ or $COO(R^5)COO(R^5)\overset{+}{N}(R^3)_2.X^-$ where R, $R^3$, $R^5$ and $X^-$ are as above. A suitable example of RX that can be used for quaternising is stearyl chloride.

The (meth) allyl ethers are particularly preferred and give polymers having a particularly good combination of performance, rheology, linearity and stability properties during use. It is very surprising that they are so good since all the recent developments in associative polymers including hydrophobic groups have used acrylic monomers and the allyl polymers proposed in GB 1,167,524 and 1,273,552 appear to have been unsuccessful commercially, possibly because of the form in which they were produced.

The allyl ethers may be made by, for instance, reacting an appropriate surfactant alcohol with sodium or sodium alkoxide to form the sodium derivative and then reacting this with allyl chloride, or by reacting allyl alcohol with the surfactant alcohol with or without catalyst.

Compounds in which Q includes $COOR^5COO$ may be made by reacting, e.g., acrylic acid with a hydroxycarboxylic acid followed by esterification with surfactant alcohol, or by reacting a hydroxyalkyl ester of acrylic acid with the half ester of succinic anhydride with a surfactant alcohol. Compounds in which Q includes $COOR^5OOC$ may be made by forming a half ester of a dicarboxylic acid and a surfactant alcohol, and reacting this, an unsaturated acid and a diol.

All the other described monomers are described in the quoted patents or can be obtained by routine methods.

It is particularly preferred in the invention that n should be an integer of at least 5 and preferably at least 10, m generally being zero, since the provision of a polyoxylethylene chain promotes solubility of the monomer in water or an aqueous blend. The monomer is preferably soluble in water, that is to say that when it is mixed into a dispersion of water and non-aqueous liquid it goes preferentially into the water phase.

The comonomer or comonomers (b) must provide a water soluble blend with the monomer (a) and so will generally consist of water soluble monomers, preferably highly water soluble monomers. However small amounts, for instance up to 5% or at the most 10%, of other water insoluble monomers, for instance ethyl acrylate, may be incorporated in the blend provided they do not come out of solution. The comonomers (b) are generally acrylic and may be non-ionic, anionic or cationic.

Suitable anionic monomers include acidic groups such as acrylic acid, methacrylic acid, 2-acrylamido-2-methyl propane sulphonic acid or other unsaturated sulphonic or carboxylic acids. Acids having high water solubility, such as acrylic acid, may be present in free acid or salt form, or a blend thereof, but acids of lower solubility, such as methacrylic acid, are preferably present in salt form, i.e., alkali metal, ammonium or amine salt. Non-ionic monomers, often used in combination with anionic or cationic monomers, include acrylamide or methacrylamide. Suitable cationic monomers include dialkylaminoalkyl acrylates or methacrylates and dialkylaminoalkyl acrylamides or methacrylamides wherein the substituents are such that the monomer is water soluble. For instance the dialkylaminoalkyl groups may be present in the form of soluble quaternary or other salts.

Water soluble cross-linking monomers may be included in an amount, generally below 1%, such that the polymer has the desired degree of swellability in aqueous systems, or the polymer may be uncross-linked and soluble in aqueous systems.

Particularly preferred polymers of the invention are those in which the monomers are acrylic acid (as free acid or water soluble salt) or acrylamide or a blend thereof, and, especially, those that have been cross linked by an amount of cross linking agent such that the resultant polymer particles will swell but not dissolve in aqueous systems, e.g., aqueous dilute alkali. For instance the particles will swell by at least twice their volume and often at least 10 times their volume. These small, swellable, cross linked anionic particles are of particular value as thickeners for print pastes. It is very surprising that the associative effect that is believed to occur in associative polymers having the described pendant hydrophobic groups does exist beneficially in cross linked particles of the size conventionally made by reverse phase polymerisation, for instance 0.3 to 3, generally about 1, μm.

The proportions of anionic, non-ionic and

cationic monomers can vary widely and, in particular, any type of monomer that is present can be present in an amount of, typically, 10 to 100% by weight of the total amount of monomer (b).

The reverse phase polymerisation process is generally conducted in the presence of a polymeric polymerisation stabiliser.

Suitable suspension stabilisers include amphiphathic copolymers of hydrophobic monomers with hydrophilic monomers and which are soluble or dispersible in liquids of low polarity. The preferred stabilisers are either completely soluble or form fine dispersions in the continuous phase but are substantially insoluble in the monomer solution. These are typified by copolymers of alkyl acrylates or methacrylates with acrylic or methacrylic acid and copolymers of alkyl acrylates or methacrylates with dialkyl amino alkyl-(generally dimethyl aminoethyl)-acrylate methacrylate or quaternary ammonium or acid salt derivatives of these amino monomers. The most suitable of these are copolymers of alkyl methacrylates, where the alkyl group is a linear hydrocarbon of 12-18 carbon atoms, with methacrylic acid or trimethyl-beta-methacryloxyethyl-ammonium chloride and terpolymers with methyl methacrylate and hydroxyethylacrylate. Suitable materials are described in BP 1,482,515, US 4,339,371 and EP 126528.

The choice of stabiliser is influenced by the particular copolymer being manufactured. The stabilisers for polymers containing acrylic acid or its sodium salt are preferably cationic and those for polymers containing dimethyl amino methyl acrylate or its salts or quaternary ammonium derivatives, or other cationic polymers, are preferably anionic.

The amount of suspension polymerisation stabiliser used is dependent on the size range of polymer particles required because at least a mono-layer absorbed at the interface betwen the polymer particle and the continuous phase is required to stabilise the dispersion both during polymerisation and during subsequent handling or use of it. Generally the amount of stabilizer is from 0.05 to 10%, preferably 0.5 to 5%, based on the weight of the aqueous dispersion when, as is preferred, the particle size is to be small, for instance below 5 $\mu$m and generally in the range 0.2 to 2 or 3 $\mu$m. If larger particles are satisfactory then lower amounts of stabiliser, for instance 0.01 to 0.5%, may be satisfactory.

The reverse phase polymerisation process may be a reverse phase emulsion polymerisation process, in which event it is conducted in the presence of a substantial amount of water-in-oil, low HLB, emulsifier, but preferably the process is a reverse phase suspension polymerisation process. Accordingly the aqueous monomer droplets may be produced solely by the application of shear to a mixture of the aqueous monomer and the oil and stabilizer, but it is often convenient to include a small amount of a water-in-oil, low HLB, emulsifier so as to reduce the amount of shear that has to be applied to achieve a given particle size. The low HLB emulsifier will have HLB below 7, and generally 4 to 6 and typical emulsifiers are sorbitan monostearate, sorbitan monooleate, glyceryl monostearate and various ethoxylated fatty alcohols. They are usually soluble in the non-aqueous liquid. The amount of low HLB emulsifier is preferably below 1.5% or 2%, typically 0.1 to 0.8% by weight based on the weight of the aqueous monomer dispersion in oil or below 3% by weight based on the non aqueous phase.

The non-aqueous liquid may be selected from any of the non-aqueous liquids conventionally used in reverse phase polymerisation processes, such as aromatic and aliphatic hydrocarbons and halogenated hydrocarbons, for instance as discussed in EP 126528. If desired it may also include polar liquid as discussed in EP 126528.

Polymerisation is induced by the use of a water soluble initiator in known manner. The use of oil soluble initiator is unsatisfactory.

The resultant aqueous dispersions of monomer or polymer in oil generally contain 20 to 60% by weight oil, 15 to 50% by weight polymer or monomer and 15 to 50% by weight water.

The aqueous polymer dispersion may be dehydrated in known manner, generally by azeotropic distillation, preferably under reduced pressure, the dehydration being conducted for a sufficient time that the final product is substantially anhydrous. Thus the water content in the polymer particles will be below 25% and generally below the ambient moisture content of the particles if they were exposed to the atmosphere, i.e. generally below 10% by weight. The non-aqueous liquid in the initial aqueous dispersion is usually a blend of volatile and non-volatile oils, the volatile oil being removed during the azeotropic distillation. It may be replaced by further non-aqueous liquid.

A high HLB surfactant may be added to the final dispersion in order to facilitate its distribution into water. The surfactant may be water soluble or oil soluble and generally has HLB between 8 and 11.5.

The following are examples of the invention.

Example 1

A diester was formed between itaconic acid and the 10 mole ethoxylate of stearyl alcohol by direct esterification in the presence of sulphuric acid.

A copolymer was formed by reverse phase

suspension polymerisation of this ester with ammonium acrylate. In particular, an aqueous phase was formed of 144 parts acrylic acid, 7 parts of the diester, 213 parts water, 81 parts 31.6% aqueous ammonia and traces of methylenebis-acrylamide and AZDN. A non-aqueous liquid phase was formed of 15 parts SPAN 80 (trade mark), 42 parts of a 30% solution in SBP11 of polymeric stabiliser (a copolymer of 2 moles cetostearyl methacrylate with 1 mole methacrylic acid), 117 parts Pale Oil 150 and 149 parts SBP11. Polymerisation was allowed to proceed in the usual way and the resulting inverse emulsion was dehydrated by distilling off water and SBP11 under reduced pressure to a final pressure of 10 mm/hg and at a temperature of 95°C.

The resulting anhydrous dispersion was an effective thickener, for instance in printing pastes.

## Example 2

115.2 parts of acrylic acid, 28.8 parts of acrylamide, 2.3 parts of a 9 mole ethylene oxide condensate of nonylphenol acrylate (a water soluble derivative), 220 parts of water, 65 parts 32% aqueous ammonia, 0.4, parts of Tetralon B, 0.04 parts of AZDN and 0.04 parts of methylene bisacrylamide were mixed to form an aqueous phase. A non-aqueous liquid phase was formed of 15 parts Span 80, 42 parts of a 30% w/w solution of a 1:2 molar copolymer of cetostearyl methacrylate:methacrylic acid in SBP11, 117 parts of Pale Oil 150 and 149 parts of SBP11. The aqueous phase was homogenised into the oil phase, deoxygenated and polymerised using 0.043 parts of sodium metabisulphite and 0.043 parts of tertiary butyl hydroperoxide. The resulting inverse dispersion of hydrated polymer gel was dehydrated by distillation under reduced pressure to a final pressure of 10 mm of mercury at a temperature of 95°C.

The resulting anhydrous dispersion was an effective thickener.

## Example 3

181.8 parts of a 79.2% solution of acrylic acid in water, 0.4 parts of Tetralon B, 5.8 parts of the allyl ether of a 10 mole ethoxylate of stearyl alcohol, 118 parts of water, 0.0424 parts of AZDN and 116 parts of a 29.9% solution of ammonia in water were mixed to form an aqueous solution. A non-aqueous liquid phase was formed from 7.4 parts of Span 80, 42.4 parts of a 30% solution in SBP11 of an inverse dispersion stabiliser (copolymer of 2 moles cetostearyl methacrylate with 1 mole of methacrylic acid), 127.3 parts of Pale Oil 60 and 145.7 parts of SBP11.

The aqueous phase was homogenised into the oil phase, deoxygenated and polymerised using 0.042 parts of sodium metabisulphite dissolved in 2.058 parts of water and tertiary butyl hydroperoxide added continuously as a 0.5% solution in water at a rate of 0.14 parts per minute. The resulting inverse dispersion of hydrated polymer was distilled as in example 2 to yield a dehydrated concentrated polymer dispersion to which was added 2 parts of a 5 mole ethoxylate of nonyl phenol and 1 part of a 4 mole ethoxylate of a broad cut lauryl alcohol per 100 parts of concentrated dehydrated dispersion. This formed a dispersion of 50% active copolymer which dispersed with agitation in water to yield a highly viscous polymer solution with the characteristic 'soap gel' rheology of associated water soluble polymers. The polymer was a useful flocculant for clay particles in water or sodium hydroxide solution.

## Example 4

The process of Example 3 was repeated where the aqueous phase contained in addition 0.063 parts of methylene bis acrylamide as bi-functional crosslinking comonomer. The resultant dehydrated polymer particles swelled in water to form a highly viscous but non-viscoelastic paste useful as a vehicle for printing textiles and other articles particularly on cloth containing residual electrolyte where pastes thickened with conventinal polyammonium acrylate microgel latices give holoing, bleeding or flushing of print colour.

## Example 5

A copolymer of 85 parts of acrylamide and 15 parts of the allyl ether of a 10 mole ethoxylate of stearyl alcohol was prepared by inverse dispersion polymerisation.

Thus an aqueous solution containing 120.7 parts of acrylamide, 0.83 parts of Tetralon B, 269.6 parts of water, 21.3 parts of the above allyl ether and 0.043 parts of A2DN with the pH adjusted to 5 was homogenised into an oil phase containing 7.3 parts of Span 80, 41.4 parts of the stabiliser solution of Example 3, 108.9 parts of Pale Oil 60 and 157.2 parts of ABP11. The monomer solution dispersion was deoxygenated and polymerised using 4.1 parts of a 0.1% solution of tertiary butyl hydroperoxide in water using 10 parts of a 5 mole ethoxylate of nonylphenol per 100 parts of dehydrated polymer dispersion. The product dispersed in water to form a solution of 'soap gel' rheology characteristic of associated polymer solutions which was unaffected by mono or multivalent electrolytes. These polymer solutions were found to be effective flocculants for clay suspensions in water

and as rheology modifiers for printing pastes.

## Claims

1. A process of making a polymer by copolymerising (a) an ethylenically unsaturated monomer containing a pendant hydrophobic group of at least 8 carbon atoms and (b) a water soluble ethylenically unsaturated comonomer characterised in that the monomers are, as a blend, soluble in water and that a dispersion in non-aqueous liquid is formed of an aqueous solution of a blend of all the monomers and the blend is copolymerised by reverse phase polymerisation in the presence of water soluble initiator to form a stable dispersion of aqueous polymer in the non-aqueous liquid.

2. A process according to claim 1 in which the reverse phase polymerisation is a reverse phase suspension polymerisation conducted in the presence of below 3% by weight, based on the non-aqueous phase, of a low HLB surfactant.

3. A process according to claim 1 or claim 2 in which the reverse phase polymerisation is conducted in the presence of a suspension stabilizer that is an amphipathic copolymer of hydrophilic and hydrophobic monomers.

4. A process according to any of claims 1 to 3 in which the monomer (a) is the ester or amide of an ethylenically unsaturated acid, or a (meth) allyl ether, with a hydroxy terminated surfactant having HLB above 8.

5. A process according to any of claims 1 to 4 in which the monomer (a) has the formula $CH_2=CR'CH_2OB_nA_mR$ where R' is H or Me, A is propoxy or butoxy, B is ethoxy, n is zero or an integer 2 to 100, m is zero or an integer less than n, R is a hydrophobic group of at least 8 carbon atoms.

6. A process according to any of claims 1 to 5 in which the monomer (a) includes a polyethoxy chain between the ethylenically unsaturated carbon and the hydrophobic group, the chain being of sufficient length that the monomer is soluble in the aqueous phase.

7. A process according to any of claims 1 to 3 in which monomer (a) has the formula $CH_2=C(R^2)QR$ where $R^2$ is H or $CH_3$, R is a hydrophobic group of at least 8 carbon atoms and Q is $COOR^5\,{}^{+}N(R^3)_2X^-$ or $CON(R^4)R^5\,{}^{+}N(R^3)_2X^-$ where $R^4$ is H or $CH_3$ and $R^5$ is $C_{1-8}$ alkylene and each $R^3$ is $C_{1-8}$ alkyl and $X^-$ is an anion.

8. A process according to any of claims 1 to 7 in which the monomers (b) are selected from ethylenically unsaturated carboxylic and sulphonic acids, in the form of water soluble free acids and water soluble salts, acrylamide, methacrylamide, dialkyl amino alkyl (meth) acrylate or (meth) acrylamide, in the form of water soluble acid addition or quaternary ammonium salts, and water soluble cross linking agents.

9. A process according to claim 8 in which the monomers (b) are selected from acrylic acid as free acid or water soluble salt and acrylamide.

10. A process according to claim 9 including cross linking agent in an amount such that the resultant particles will swell but not dissolve in aqueous systems.

11. A process according to any preceding claim that is conducted in the presence of water-in-oil emulsifier and the polymer particles in the product have a dry size of below 4$\mu$m.

12. A reverse phase polymer dispersion made by a process according to any of claims 1 to 11.

## Revendications

1. Un procédé de fabrication d'un polymère par copolymérisation de (a) un monomère éthylénique contenant un groupe hydrophobe en au moins $C_8$ et (b) un comonomère éthylénique soluble dans l'eau, caractérisé en ce que les monomères sont, en mélange, solubles dans l'eau et en ce qu'une dispersion dans un liquide non aqueux est formée d'une solution aqueuse d'un mélange de tous les monomères et le mélange est copolymérisé par polymérisation à inversion de phases en présence d'un inducteur soluble dans l'eau pour former une dispersion stable du polymère aqueux dans le liquide non aqueux.

2. Un procédé selon la revendication 1, dans lequel la polymérisation à inversion de phases est une polymérisation en suspension à inversion de phases conduite en présence de moins de 3% en poids, par rapport à la phase non aqueuse, d'un tensioactif de faible BHL.

3. Un procédé selon la revendication 1 ou 2, dans lequel la polymérisation à inversion de phases

est conduite en présence d'un stabilisant de suspension qui est un copolymère amphiphile de monomères hydrophiles et hydrophobes.

4. Un procédé selon l'une quelconque des revendications 1 à 3, dans lequel le monomère (a) est l'ester ou amide d'un acide éthylénique ou un éther (méth)allylique avec un tensioactif à groupe hydroxyle terminal ayant une BHL de plus de 8.

5. Un procédé selon l'une quelconque des revendications 1 à 4, dans lequel le monomère (a) répond à la formule $CH_2=CR'CH_2OB_nA_mR$, ou dans laquelle R' est H ou Me, A est un groupe propoxy ou butoxy, B est un groupe éthoxy, n est égal à 0 ou un entier de 2 à 100, m est égal à 0 ou un entier inférieur à n, R est un groupe hydrophobe en au moins $C_8$.

6. Un procédé selon l'une quelconque des revendications 1 à 5 dans lequel le monomère (a) contient une chaîne polyéthoxy entre le carbone éthyléniquement insaturé et le groupe hydrophobe, la chaîne ayant une longueur suffisante pour que le monomère soit soluble dans la phase aqueuse.

7. Un procédé selon l'une des revendication 1 à 3, dans lequel le monomère (a) répond à la formule $CH_2=C(R^2)QR$, dans laquelle $R^2$ est H ou $CH_3$, R est un groupe hydrophobe en au moins $C_8$ et Q est $COOR^5\overset{+}{N}(R^3)_2X^-$ ou $CON(R^4)R^5\overset{+}{N}(R^3)_2X^-$, dans lesquels $R^4$ est H ou $CH_3$ et $R^5$ est un groupe alkylène en $C_1$-$C_8$ et chaque $R^3$ est un groupe alkyle en $C_1$-$C_8$ et $X^-$ est un anion.

8. Un procédé selon l'une quelconque des revendications 1 à 7, dans lequel les monomères (b) sont choisis parmi les acides carboxyliques et sulfoniques éthyléniques, sous la forme d'acides libres solubles dans l'eau et de sels solubles dans l'eau, l'acrylamide, le méthacrylamide les (méth)acrylates de dialkylaminoalkyles ou les dialkylaminoalkyl(méth)acrylamides sous la forme de sels d'addition d'acides solubles dans l'eau ou de sels d'ammonium quaternaire et les agents réticulants solubles dans l'eau.

9. Un procédé selon la revendication 8, dans lequel les monomères (b) sont choisis parmi l'acide acrylique sous forme d'acide libre ou de sels solubles dans l'eau et l'acrylamide.

10. Un procédé selon la revendication 9, contenant un agent réticulant en quantité telle que les particules résultantes gonflent, mais ne se dissolvent pas, dans les systèmes aqueux.

11. Un procédé selon l'une quelconque des revendications précédentes, qui est conduit en présence d'un émulsifiant huile dans l'eau et les particules de polymère dans le produit ont une dimension à sec de moins de 4 µm.

12. Une dispersion de polymère à inversion de phases fabriquée par un procédé selon l'une quelconque des revendications 1 à 11.

**Patentansprüche**

1. Verfahren zur Herstellung eines Polymers durch Copolymerisierung (a) eines ethylenisch ungesättigten, eine hydrophobe Gruppe von mindestens 8 Kohlenstoffatomen als Substituenten enthaltenden Monomers und (b) eines wasserlöslichen, ethylenisch ungesättigten Comonomers, dadurch gekennzeichnet, daß die Monomeren als Gemisch wasserlöslich sind und daß eine Dispersion in einer nicht-wäßrigen Flüssigkeit aus einer wäßrigen Lösung des Gemisches aller Monomeren gebildet wird und das Gemisch durch Umkehrphasen-Polymerisation in Gegenwart eines wasserlöslichen Initiators unter Bildung einer stabilen Dispersion des wäßrigen Polymers in der nicht-wäßrigen Flüssigkeit copolymerisiert wird.

2. Verfahren gemäß Anspruch 1, bei welchem die Umkehrphasen-Polymerisation eine Umkehrphasen-Suspensionspolymerisation ist, die in Gegenwart von weniger als 3 Gew.-%, bezogen auf die nicht-wäßrige Phase, eines oberflächenaktiven Mittels mit niedrigem HLB-Wert durchgeführt wird.

3. Verfahren gemäß Anspruch 1 oder 2, bei welchem die Umkehrphasen-Polymerisation in Gegenwart eines Suspensionsstabilisators durchgeführt wird, der ein amphipathisches Copolymer von hydrophilen und hydrophoben Monomeren ist.

4. Verfahren gemäß irgendeinem der Ansprüche 1 bis 3, bei welchem das Monomer (a) der Ester oder das Amid einer ethylenisch ungesättigten Säure oder ein (Methyl)allylether ist, mit einem oberflächenaktiven Mittel mit endständiger Hydroxygruppe und einem HLB-Wert oberhalb 8.

5. Verfahren gemäß irgendeinem der Ansprüche 1 bis 4, bei welchem das Monomer (a) die Formel $CH_2=CR'CH_2OB_nA_mR$ hat, in welcher

R' = H oder Me ist, A Propoxy oder Butoxy bedeutet, B Ethoxy bedeutet, n = 0 oder eine ganze Zahl von 2 bis 100 ist, m = 0 oder eine ganze Zahl kleiner als n ist und R eine hydrophobe Gruppe mit mindestens 8 Kohlenstoffatomen bedeutet.

**6.** Verfahren gemäß irgendeinem der Ansprüche 1 bis 5, bei welchem das Monomer (a) eine Polyethoxykette zwischen dem ethylenisch ungesättigten Kohlenstoffatom und der hydrophoben Gruppe aufweist, wobei die Kette eine ausreichende Länge hat, damit das Monomer in der wäßrigen Phase löslich ist.

**7.** Verfahren gemäß irgendeinem der Ansprüche 1 bis 3, bei welchem das Monomer (a) die Formel $CH_2=C(R^2)QR$ hat, worin $R^2$ = H oder $CH_3$ ist, R eine hydrophobe Gruppe mit mindestens 8 Kohlenstoffatomen bedeutet und Q $COOR^5N^+(R^3)_2X^-$ oder $CON(R^4)R^5N^+(R^3)_2X^-$ ist, worin $R^4$ = H oder $CH_3$ ist und $R^5$ $C_1$- -$C_8$-Alkylen bedeutet, jedes $R^3$ $C_1$-$C_8$-Alkyl bedeutet und $X^-$ ein Anion ist.

**8.** Verfahren gemäß irgendeinem der Ansprüche 1 bis 7, bei welchem die Monomeren (b) aus ethylenisch ungesättigten Carbon- und Sulfonsäuren, in Form der wasserlöslichen freien Säuren und wasserlöslichen Salze, aus Acrylamid, Methacrylamid, Dialkylaminoalkyl(meth)-acrylat oder -(meth)acrylamid, in Form von wasserlöslichen Säureadditionssalzen oder quaternären Ammoniumsalzen, und aus wasserlöslichen Vernetzungsmitteln ausgewählt werden.

**9.** Verfahren gemäß Anspruch 8, bei welchem die Monomeren (b) aus Acrylsäure als freie Säure oder wasserlösliches Salz und Acrylamid ausgewählt werden.

**10.** Verfahren gemäß Anspruch 9,in dem ein Vernetzungsmittel in einer solchen Menge anwesend ist, das die erhaltenen Teilchen in wäßrigen Systemen quellen, sich jedoch nicht lösen.

**11.** Verfahren gemäß irgendeinem vorhergehenden Anspruch, das in Gegenwart eines Wasser-in-Öl-Emulgators durchgeführt wird und bei dem die Polymerteilchen im trockenen Produkt eine Größe unter 4 $\mu$m haben.

**12.** Umkehrphasen-Polymeridispersion, hergestellt nach einem Verfahren gemäß irgendeinem der Ansprüche 1 bis 11.